# EUROPÄISCHE PATENTSCHRIFT

(11) **EP 1 279 988 B1**
(45) Veröffentlichungstag und Bekanntmachung des Hinweises auf die Patenterteilung: **19.04.2006**
(21) Anmeldenummer: 02015625.3
(22) Anmeldetag: 16.07.2002
(51) Int. Cl.: G02B 27/09

(54) **Laserbeleuchtungsvorrichtung zur Beleuchtung eines streifen- oder linienförmigen Bereichs**
Laser illumination device for illuminating a line or a strip-like area
Appareillage d'illumination laser pour illuminer une partie rectiligne ou une bande

(30) Priorität: 23.07.2001 DE 10135828
(43) Veröffentlichungstag der Anmeldung: 29.01.2003
(73) Patentinhaber: Giesecke & Devrient GmbH, 81677 München (DE)
(72) Erfinder: Deckenbach, Wolfgang, 83135 Schechen (DE); Attenberger, Thomas, Dr., 85586 Poing (DE)
(74) Vertreter: Klunker . Schmitt-Nilson . Hirsch

(56) Entgegenhaltungen:
- EP-A- 0 762 174
- EP-A- 1 170 707
- US-A- 4 293 776
- US-A- 5 140 608
- PATENT ABSTRACTS OF JAPAN vol. 2000, no. 12, 3. Januar 2001 (2001-01-03) -& JP 2000 237888 A (FINE MACHINING KK), 5. September 2000 (2000-09-05)
- PATENT ABSTRACTS OF JAPAN vol. 017, no. 428 (P-1588), 9. August 1993 (1993-08-09) & JP 05 088006 A (DAINIPPON SCREEN MFG CO LTD), 9. April 1993 (1993-04-09)

## Beschreibung

Die Erfindung betrifft eine Laserbeleuchtungsvorrichtung zum Beleuchten eines streifen- oder linienförmigen Bereichs eines Gegenstands, insbesondere von Blattgut.

Derartige Beleuchtungsvorrichtungen werden zum Beispiel in Prüfvorrichtungen für die spektroskopische Untersuchung blattförmigen Guts, zum Beispiel von Banknoten, Ausweisen und dergleichen, eingesetzt. Von dem beleuchteten streifen- oder linienförmigen Bereich des Gegenstands remittiertes oder transmittiertes Licht wird von einem Sensor erfaßt und ausgewertet, um zum Beispiel das Vorhandensein von Fehlern oder bestimmten Eigenschaften nachzuweisen.

Aus der EP 0 762 174 (entspricht DE 195 32 877) ist eine Beleuchtungsvorrichtung zum Beleuchten eines streifen- oder linienförmigen Bereichs von Blattgut bekannt, die aus Segmenten eines zylindrischen Spiegels elliptischer Grundfläche besteht. Auf einer von zwei Fokuslinien befindet sich eine Leuchtdiodenanordnung (LED-Anordnung), die andere Fokuslinie entspricht dem beleuchteten Bereich des Blattguts. Speziell für spektroskopische Untersuchungen ist jedoch das von Leuchtdioden emittierte Licht ungünstig, da das Licht breitbandig ist. Außerdem ist die Bestrahlungsstärke gering. Angestrebt wird aber eine hohe Bestrahlungsstärke in dem zu beleuchtenden Bereich.

In einer älteren deutschen Patentanmeldung der Anmelderin (100 19 428.1) ist eine Laserbeleuchtungsvorrichtung zum Beleuchten eines streifen- oder linienförmigen Bereichs von Blattgut beschrieben, bei der eine im Vergleich zu einer mit Leuchtdioden bestückten Beleuchtungsvorrichtung verbesserte Beleuchtungsstärke erreicht wird. Da bei lasertechnischen Anwendungen Vorschriften über den Schutz der Augen von Personen beachtet werden müssen, ist bei dem älteren Vorschlag eine Lichtleiteroptik zwischen der Laserlichtquelle und dem zu beleuchtenden Bereich vorgesehen, um den Laserstrahlquerschnitt so zu ändern, daß bei Einfall des Laserstrahlbündels in ein menschliches Auge auf der Netzhaut des Auges ein relativ großer Fleck entsteht, bei dem die Leistungsdichte hinreichend gering ist. Die Faseroptik bedingt jedoch einen komplexen Aufbau und führt außerdem zu einem beträchtlichen Lichtverlust.

Aus der DE 43 35 244 A1 ist ein sogenannter Laserscheinwerfer mit zwei optischen Platten jeweils in Form einer zylindrischen Fresnellinse mit Mikrolinsenstruktur bekannt. Eine solche Anordnung eignet sich allerdings nicht zur Beleuchtung von linien- oder streifenförmigen Bereichen. Die großflächigen zylindrischen Fresnellinsen bringen beträchtliche Lichtverluste in der Größenordnung von 30-70% der Laserleistung mit sich. Eine ähnliche Anordnung - allerdings mit mehreren Laserquellen - ist aus der DE 197 09 302 A1 bekannt.

Um die Nachweisempfindlichkeit einer Prüfvorrichtung für Blattgut zu steigern, ist eine hohe Strahlungsleistung an der beleuchteten Stelle erwünscht. Hohe Strahlungsleistungen lassen sich durch Beleuchtungsvorrichtungen mit Laserlichtquellen erreichen, beispielsweise Laserdioden der Laserklassen 3B und 4, Nd:YAG-Laser, Festkörperlaser allgemein, und zwar gepulst oder im cw-Betrieb. In Betracht kommen Wellenlängen vom UV-Bereich über den sichtbaren Bereich bis in den infraroten Bereich, das heißt Wellenlängen von unter 400 nm bis zu etwa 1400 nm.

Aus der US 5,140,608 ist eine Laserbeleuchtungsvorrichtung zum Beleuchten einer Linie mit einer Laserdiode bekannt. Mit einer astigmatischen Linse wird der Lichtstrahl der Laserdiode linienförmig aufgefächert, wobei der Abstand der Linse von der Laserdiode groß im Vergleich zu ihrer Brennweite ist.

Eine weitere Beleuchtungsvorrichtung, die einen aufgefächerten Lichtstrahl mittels einer astigmatischen Linse erzeugt ist aus der US 4,293,776 bekannt.

Aus der JP 2000237888 A ist eine Laserstrahlmaschine mit einem System aus einer Vielzahl von zylindrischen Linsen bekannt, welche senkrecht zur Strahlenrichtung angeordnet sind und deren Längsachsen jeweils einen unterschiedlichen Winkel zueinander aufweisen. Die Vielzahl der Linsen wird dabei so angeordnet, daß ein durch die Linsen tretender Lichtstrahl nach dem Durchtritt durch die Linsen eine Form aufweist, die in etwa der Form einer Blende entspricht, die in der zugrundeliegenden Laserstrahlmaschine verwendet wird. Zur Gewährleistung des Augenschutzes von Personen müssen allerdings restriktive Leistungsbeschränkungen eingehalten werden, das heißt, man darf mit nur relativ geringen Laserleistungen arbeiten, oder es müssen spezielle Sicherheitsmaßnahmen ergriffen werden, die allerdings die gesamte Anlage kompliziert und aufwendig machen.

Der Erfindung liegt die Aufgabe zugrunde, eine Laserbeleuchtungsvorrichtung für eine Prüfvorrichtung für Blattgut, zum Beleuchten eines streifen- oder linienförmigen Bereichs des zu prüfen Blattguts anzugeben, die eine starke Beleuchtung des zu beleuchtenden Bereichs mit Laserlicht ermöglicht, sich durch geringe Verluste auszeichnet und außerdem den erforderlichen Augenschutz von Personen gewährleistet.

Erfindungsgemäß wird diese Aufgabe Lasers durch die Merkmale von Anspruch 1 gelöst.

Zunächst einmal wird bei der erfindungsgemäßen Laserbeleuchtungsvorrichtung das von einer Laserlichtquelle erzeugte Laserlicht räumlich in zwei zueinander orthogonalen Richtungen aufgefächert, um einen Laserlichtstrahlfächer zu bilden. Dieser Laserlichtstrahlfächer wird von einer astigmatischen Linse, die im Vergleich zu ihrem Abstand vom Ursprung des Laserlichtstrahlfächers eine geringe Brennweite besitzt, in Bezug auf den zu beleuchtenden Bereich so angeordnet, daß in diesem Bereich eine Linien- oder Streifenbeleuchtung erzielt wird. Durch die relativ geringe Brennweite der astigmatistischen Linse, die insbesondere als Rasterstablinse ausgebildet ist, wird der zu beleuchtende Bereich in relativ geringer Nähe zu dieser astigmatischen Linse angeordnet, und mit zunehmendem Abstand von der Brennebene der astigmatischen Linse läuft das Laserstrahlbüschel unter möglichst großem Divergenzwinkel auseinander. Ein großer Divergenzwinkel bedeutet aber für einen möglichen Beobachter in diesem Bereich, daß er mit einer relativ geringen Leistungsdichte der Laserstrahlen konfrontiert wird.

Die Bildung des Laserlichtstrahlfächers wird ebenfalls mit einer astigmatischen Linse erreicht, so daß im Ausgangsstrahlengang des Lasers zum Beispiel zwei zueinander orthogonale Stablinsen mit relativ großem Abstand - bezogen auf ihre Brennweiten - angeordnet sind. Eine solche Anordnung von zwei astigmatischen Linsen ermöglicht einen äußerst einfachen Aufbau bei gleichzeitiger Gewährleistung des geforderten Augenschutzes für mögliche Beobachter. Durch entsprechende geometrische Anordnung und Auswahl der Linsen läßt sich erreichen, daß das gesamte Laserlicht durch die Linsen hindurchtritt, was Verluste vermeidet. Durch zusätzliches Entspiegeln der optischen Elemente läßt sich eine weitere Verlustverminderung erreichen.

Durch die erfindungsgemäßen Maßnahmen wird es möglich, eine Laserlichtquelle hoher Ausgangsleistung einzusetzen, und dadurch - noch verstärkt durch Maßnahmen zur Eindämmung von Verlusten - läßt sich in dem zu beleuchtenden Bereich eine hohe Strahlungsleistung erzielen. Da das Laserlicht extrem schmalbandig ist, eignet es sich besonders gut zur Durchführung spektroskopischer Prüfungen von beispielsweise Banknoten und dergleichen. Außerdem wird trotz der hohen Laserleistung der Augenschutz von Personen gewährleistet; denn das Laserlicht kann aufgrund der astigmatischen Linsenanordnung (Astigmatismus = Punktlosigkeit) nicht mehr auf einen Punkt der Netzhaut fokussiert werden, sondern nur noch auf eine Linie der Netzhaut. Hierdurch werden punktuelle hohe Leistungsdichten auf der Netzhaut vermieden. Dadurch wird es möglich, z. B. bei Einhaltung der Norm DIN EN 60825 in der Laserklasse 3a, die nur wenige mW zuläßt, die Leistung auf mehrere hundert mW zu erhöhen. Bei entsprechender Auswahl der Bauteile und entsprechender geometrischer Anordnung lassen sich Linien- bzw. Streifenbreiten von unter 0,5 mm erzielen.

Im folgenden werden Ausführungsbeispiele der Erfindung anhand der Zeichnung näher erläutert. Es zeigen:
- Figur 1: eine schematische, perspektivische Ansicht einer Laserbeleuchtungsvorrichtung zum Beleuchten eines linienförmigen Bereichs auf einer Banknote;
- Figur 2: eine schematische Seitenansicht der in Figur 1 gezeigten Anordnung; und
- Figur 3: eine perspektivische Ansicht einer alternativen Laserlichtquelle, die eine Einsparung der in den Figuren 1 und 2 dargestellten Strahlaufweitoptik ermöglicht.

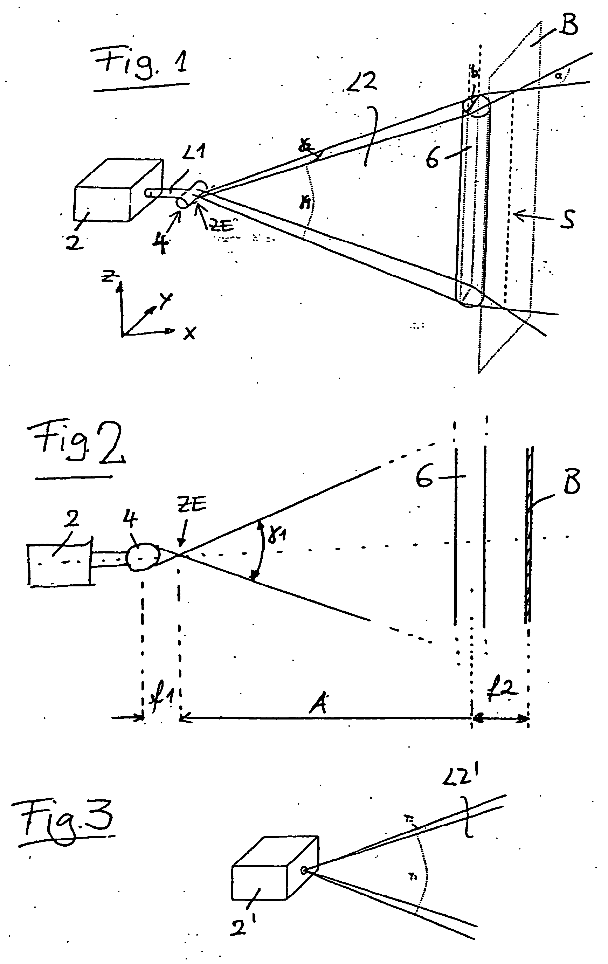

Figur 1 zeigt einen Teil einer Prüfvorrichtung zur spektroskopischen Untersuchung von Banknoten, wobei diese Vorrichtung hier nur beispielhaft für zahlreiche andere Vorrichtungen steht, in denen die erfindungsgemäße Laserbeleuchtungsvorrichtung eingesetzt werden kann.

Eine hier zum Beispiel als Diodenlaser ausgebildete Laserlichtquelle 2 gibt einen kollimierten Laserstrahl L1 auf eine mit ihrer Längsachse in Y-Richtung eines karthesischen Koordinatensystems orientierte Rasterstablinse 4. Die Rasterstablinse 4 erzeugt aus dem kollimierten Laserstrahlbündel 1 einen Laserlichtstrahlfächer L2, der seinen Ursprung in einer Zwischenbildebene ZE hat und gekennzeichnet ist durch zwei Divergenzwinkel, nämlich einen ersten Divergenzwinkel γ1 in Z-Richtung, und einen dazu orthogonalen Divergenzwinkel γ2 in Y-Richtung.

Der Laserlichtstrahlfächer L2 trifft auf eine Stablinse 6, deren Längsachse orthogonal zu der Längsachse der Stablinse 4 orientiert ist. Wie oben in Figur 1 angedeutet ist, sind die Abmessungen der Stablinse 6 auf den Querschnitt des Laserlichtstrahlfächers L2 so abgestimmt, daß die Breite b des Laserlichtstrahlfächers L2 im Bereich der Stablinse 6 kleiner ist als der Durchmesser der Stablinse 6. In Längsrichtung der Stablinse 6 fällt der gesamte Querschnitt des Laserlichtstrahlfächers in die Linse ein.

Die Stablinse 6 führt die Strahlen des Laserlichtstrahlfächers L2 zusammen, so daß sich auf einer Banknote B ein streifen- oder linienförmiger beleuchteter Bereich S ergibt. Man kann den Abstand zwischen der Banknote B und der Stablinse 6 so wählen, daß der beleuchtete Bereich direkt in der Brennebene der Stablinse 6 liegt. In diesem Fall erhält man eine minimale Breite des linien- oder streifenförmigen Bereichs S. Wird die Banknote B etwas aus der Brennebene herausgerückt, verbreitert sich der beleuchtete Streifen S. Figur 2 zeigt die geometrischen Verhältnisse der in Figur 1 dargestellten Anordnung in einer Seitenansicht. Die Brennweite der Stablinse 4 ist mit f1 bezeichnet, diejenige der Stablinse 6 mit f2. Der Abstand zwischen den Mittelachsen der beiden Stablinsen 4 und 6 ist mit A + f1 bezeichnet. Der Abstand A + f1 entspricht einem Mehrfachen sowohl der Brennweite f1 als auch der Brennweite f2.

Gewisse Laser besitzen von Hause aus Divergenzeigenschaften, die den in Figur 1 dargestellten Verhältnissen des Laserlichtstrahlfächers L2 entsprechen. Ein solcher Laser, insbesondere ein Diodenlaser, ist in Figur 3 als alternative Ausführungsform dargestellt. Der als Laserlichtquelle 2' fungierende Diodenlaser gibt einen Laserlichtstrahlfächer L2' ab, der zwei Konvergenzwinkel γ1 und γ2 aufweist. In diesem Fall kann man auf die in Figur 1 und 2 dargestellte erste Stablinse 4 verzichten.

Wie in den Figuren 1 und 2 dargestellt ist, ist die Brennweite f2 der Stablinse 6 im Verhältnis zum Abstand zwischen den beiden Stablinsen 4 und 6 sehr gering. Dies bedeutet, daß hinter der Brennebene entsprechend der Lage der Banknote B eine starke Strahlverbreiterung unter einem Winkel α stattfindet, einhergehend mit einer entsprechenden Abnahme der Leistungsdichte. Wenn hinter der Banknote B das aufgefächerte Laserlicht in das Auge einer Person fallen sollte, wird auf der Netzhaut des Auges das Licht nur auf eine Linie fokussiert, eine punktförmige Fokussierung ist ausgeschlossen. Hierdurch ist das Erfordernis einer Obergrenze für die örtliche Belastung der Netzhaut erfüllt.

Der vorgenannte Divergenzwinkel α (Fig. 1) gehorcht der Beziehung α = 2*arctan (b/2*f2), woraus ersichtlich ist, daß eine kurze Brennweite f2 einen großen Divergenzwinkel α ergibt.

## Patentansprüche

1. Prüfvorrichtung für Blattgut (B) mit einer Laserbeleuchtungsvorrichtung zum Erzeugen eines streifen- oder linienförmigen Bereichs (S) auf dem zu prüfenden Blattgut (B) wobei die Laserbeleuchtungsvorrichtung eine Laserlichtquelle (2,2'), eine erste astigmatische Stablinse (4) und eine zweite astigmatische Stablinse (6) enhält, und die Längsachse der ersten astigmatischen Stablinse (4) orthogonal zu der Längsachse der zweiten astigmatischen Stablinse (6) orientiert ist, und wobei die erste astigmatische Stablinse eine Strahlaufweitungsoptik bildet, die einen in zwei zueinander orthogonalen Richtungen räumlich aufgefächerten Laserlichtstrahlfächer (L2) erzeugt, der seinen Ursprung in einer Zwischenbildebene (ZE) der Strahlaufweitungsoptik (4) hat und auf die zweite Stablinse (6) trifft, und wobei die erste astigmatische Stablinse (4) eine im Vergleich zu ihrem Abstand (A+f₁) von der, in der Nähe des zu prüfenden Blattguts (B) befindlichen zweiten astigmatischen Stablinse (6) kleine Brennweite (f1) hat und die zweite astigmatische Stablinse (6) eine im Vergleich zu ihrem Abstand (A) vom Ursprung des Laserlichtstrahlfächers (L2) kurze Brennweite (f2) aufweist, und deren Brennebene auf dem oder in der Nähe des zu prüfenden Blattguts (B) liegt.

2. Laserbeleuchtungsvorrichtung nach Anspruch 1, **dadurch gekennzeichnet, daß** die optischen Oberflächen der optischen Bauelemente (4, 6) entspiegelt sind.

3. Laserbeleuchtungsvorrichtung nach Anspruch 1 oder 2, **dadurch gekennzeichnet, daß** die Stablinse (4) als Rasterstablinse ausgebildet ist.

## Claims

1. A test apparatus for sheet material (B) having a laser illuminating apparatus for producing a strip-shaped or linear area (S) on the sheet material (B) to be tested, the laser illuminating apparatus containing a laser light source (2, 2'), a first astigmatic rod lens (4) and a second astigmatic rod lens (6), and the longitudinal axis of the first astigmatic rod lens (4) being oriented orthogonally to the longitudinal axis of the second astigmatic rod lens (6), and the first astigmatic rod lens forming a beam diverging optic which produces a laser light beam fan (L2) fanned out spatially in two mutually orthogonal directions, which has its origin in an intermediate image plane (ZE) of the beam diverging optic (4) and hits the second rod lens (6), and the first astigmatic rod lens (4) having a small focal length (f1) in comparison to its distance (A + f₁) from the second astigmatic rod lens (6) located near the sheet material (B) to be tested, and the second astigmatic rod lens (6) having a short focal length (f2) in comparison to its distance (A) from the origin of the laser light beam fan (L2), and the focal plane thereof lying on or near the sheet material (B) to be tested.

2. The laser illuminating apparatus according to claim 1, **characterized in that** the optical surfaces of the optical components (4, 6) are dereflected.

3. The laser illuminating apparatus according to claim 1 or 2, **characterized in that** the rod lens (4) is formed as a grid rod lens.

## Revendications

1. Dispositif de contrôle pour objet folié (B) avec un appareillage d'illumination laser pour la génération d'une zone rectiligne ou en bande (S) sur l'objet folié (B) à examiner, où l'appareillage d'illumination laser comporte une source de lumière laser (2, 2'), une première lentille cylindrique astigmatique (4) et une deuxième lentille cylindrique astigmatique (6), où l'axe longitudinal de la première lentille cylindrique astigmatique (4) est orienté orthogonalement à l'axe longitudinal de la deuxième lentille cylindrique astigmatique (6), où la première lentille cylindrique astigmatique forme une optique d'évasement de rayon, laquelle génère un éventail de rayon laser (L2) spatialement divisé selon deux directions orthogonales entre elles, qui a son origine sur un plan d'image intermédiaire (ZE) de l'optique d'évasement de rayon (4) et touche la deuxième lentille cylindrique (6), où la première lentille cylindrique astigmatique (4) a une distance focale (f1) courte en comparaison de sa distance (A + f1) à la deuxième lentille cylindrique astigmatique (6) située à proximité de l'objet folié (B) à examiner, et où la deuxième lentille cylindrique astigmatique (6) a une distance focale (f2) courte en comparaison de sa distance (A) à l'origine de l'éventail de rayon laser (L2), dont le plan focal est situé sur l'objet folié (B) à examiner ou à proximité de celui-ci.

2. Appareil d'illumination laser selon la revendication 1, **caractérisé en ce que** les surfaces optiques des composants optiques (4, 6) sont traitées antireflet.

3. Appareil d'illumination laser selon la revendication 1 ou 2, **caractérisé en ce que** la lentille cylindrique (4) est configurée comme lentille cylindrique tramée.
